# EUROPÄISCHE PATENTSCHRIFT

(11) **EP 1 380 781 B1**
(45) Veröffentlichungstag und Bekanntmachung des Hinweises auf die Patenterteilung: **24.08.2005**
(21) Anmeldenummer: 03014142.8
(22) Anmeldetag: 24.06.2003
(51) Int. Cl.: F16K 31/06

(54) **Schnelles magnetfeldunempfindliches Gaseinlassventil**
Fast gas inlet valve which is insensitive to magnetic fields
Soupape rapide de gaz insensible aux champs magnétiques

(30) Priorität: 11.07.2002 DE 10231337
(43) Veröffentlichungstag der Anmeldung: 14.01.2004
(73) Patentinhaber: FORSCHUNGSZENTRUM JÜLICH GMBH, 52425 Jülich (DE)
(72) Erfinder: Mank, Günter, Dr., 52445 Titz (DE); Finken, Karl Heinz, Dr., 52353 Düren (DE); Cornette, Peter, 52146 Würselen (DE)

(56) Entgegenhaltungen:
- DE-C- 4 010 163
- US-A- 4 344 449

## Beschreibung

Die vorliegende Erfindung betrifft ein schnelles magnetfeldunempfindliches Gaseinlaßventil gemäß dem Oberbegriff des Anspruchs 1. US 4 344 449 offenbart ein solches Gaseinlaßventil.

Bei der Montage eines Gaseinlaßventils, z.B. am Gefäß eines Fusionsreaktors, muß das Gaseinlaßventil innerhalb der Magnetfeldanordnung montiert werden, da nur kurze Gasleitungen eine schnelle Injektion von Gasen erlauben. Die injizierten Gase sind im Falle eines Fusionsexperimentes meist Edelgase, wobei ein solches Gaseinlaßventil auch in Verbindung mit weiteren Gasen und auch mit reaktiven Gasen eingesetzt wird.

Die vorgenannte Verwendung eines Gaseinlaßventils des Standes der Technik erfordert die Injektion größerer Gasmengen von der Größenordnung in mbarL bis zu mehreren barL innerhalb kürzester Zeit, z.B. in weniger als 10 Millisekunden und in einem starken elektromagnetischen Umfeld.

Diese Anforderungen können von herkömmlichen elektromagnetischen, piezoelektrischen oder pneumatischen Ventilen nicht erfüllt werden.

Es ist daher die Aufgabe der vorliegenden Erfindung, ein schnelles magnetfeldunempfindliches Gaseinlaßventil zu schaffen, mit welchem größere Gasmengen innerhalb kürzester Zeit in einem starken elektromagnetischen Umfeld sicher in ein Gefäß injiziert werden können, und mit welchem die Gasmengen variiert werden können.

Die Aufgabe wird erfindungsgemäß durch die Merkmale des kennzeichnenden Teils des Anspruchs 1 gelöst.

Das erfindungsgemäße Gaseinlaßventil verfügt in vorteilhafter Weise über ein integriertes Nachfüllvolumen, das über einen Schieber abtrennbar ist. Ferner verfügt das erfindungsgemäße Gaseinlaßventil über eine Induktionsspule, deren Anregung den Stößel aus einer Verschlußstellung in eine Öffungsstellung bewegt. Dadurch wird vermieden, daß in dem Ventil magnetische Bauteile verwendet werden müssen oder das Ventil magnetisch geöffnet werden muß. Dadurch wird der Einsatz in einem sich verändernden Magnetfeld möglich. Im Unterschied zu pneumatischen Ventilen arbeiten induktiv gesteuerte Ventile schneller, und im Vergleich zu piezoelektrischen Ventilen können mit induktiv gesteuerten Ventilen größere Gasmengen injiziert werden.

Weitere Vorteile der vorliegenden Erfindung ergeben sich aus den Merkmalen der Unteransprüche 2 bis 8.

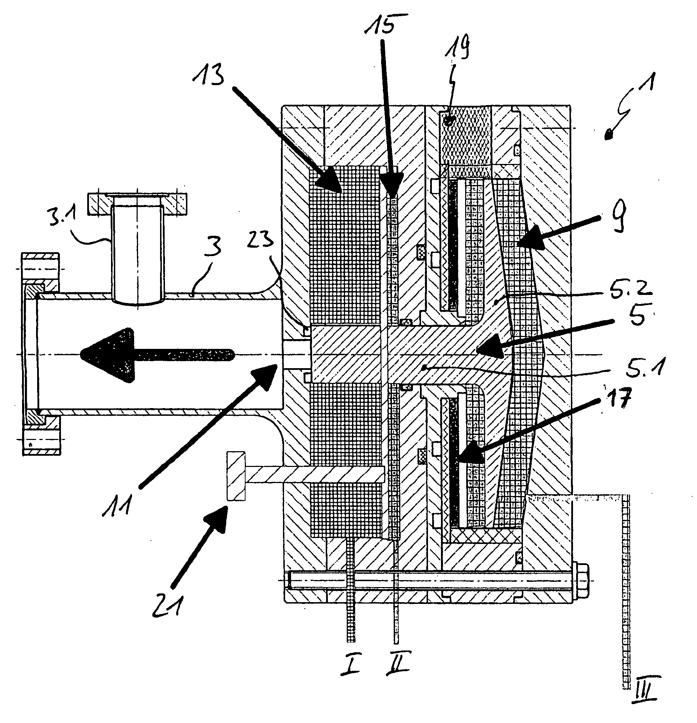

Eine Ausführungsform der vorliegenden Erfindung wird im folgenden anhand der Zeichnung näher beschrieben. Die einzige Figur zeigt schematisch ein erfindungsgemäßes Gaseinlaßventil im Schnitt. Ein Ventilkörper 1 weist ein Anschlußteil 3 zu einem Gefäß (nicht dargestellt) auf. In dem Ventilkörper 1 ist ein Stößel 5 aus Metall, z.B. Edelstahl oder Aluminium, ausgebildet. Der Stößel 5 hat im dargestellten Querschnitt eine nietförmige Gestalt mit einem Schaft 5.1 und einem Kopf 5.2. Der Kopf 5.2 des Stößels 5 ist in einem Rückstellvolumen 9 angeordnet. Der Schaft 5.1 des Stößels 5 ist dichtend aus dem Rückstellvolumen 9 heraus geführt und endet in einer Verschlußstellung dichtend vor einer Ventilöffnung 11. In vorteilhafter Weise sind der Schaft 5.1, die Ventilöffnung 11 und das Anschlußteil 3 koaxial zueinander ausgebildet.

In dem Ventilkörper 1 ist auch ein variierbares Nachfüllvolumen 13 ausgebildet, durch das ein Bereich des Schaftes 5.1 hindurch läuft. In der vorliegenden Ausführungsform ist auch ein variierbares Reduziervolumen 15 ausgebildet, durch das der Schaft 5.1 hindurch läuft. In anderen Ausführungsformen kann das Reduziervolumen 15 auch weg gelassen werden.

Eine schaftseitige Begrenzung des Rückstellvolumens 9 bildet eine induktive Flachspule 17 oder auch "pancake"-Spule, die ebenfalls koaxial und auch konzentrisch zu der vorgenannten Achse von Stößel 5, Ventilöffnung 11 und Anschlußteil 3 angeordnet ist. Die Flachspule 17 ist über ein Verbindungsteil 19 mit einer Stromversorgung (nicht dargestellt) verbunden.

Das Nachfüllvolumen 13 kann über einen Trennschieber 21 variiert und insbesondere reduziert werden.

An dem Anschlußteil 3 ist ein Anschluß 3.1 zu einer Pumpe (nicht dargestellt) und zur Druckmessung (nicht dargestellt) vorgesehen.

Der Stößel 5 kann in einem Stück aus Aluminium gefertigt sein und dichtet in einer Verschlußstellung durch Anpressen auf einen Vitonring 23 das Nachfüllvolumen 13 gegenüber einem Gefäßvolumen (nicht dargestellt) ab. Hierbei muß der Druck im Nachfiillvolumen 13 höher als im Gefäßvolumen sein. Der Stößel 5 kann im Bereich des Nachfiillvolumens 13 auch aus Edelstahl gefertigt sein, in diesem Fall muß aber aufgrund der hohen Kräfte beim Betätigen des Gaseinlaßventils gewährleistet sein, daß eine gute Verbindung zum aus Aluminium bestehenden Teil existiert. Eine solche gute Verbindung kann z.B. durch Verschraubung hergestellt werden.

Die Funktionsweise des erfindungsgemäßen Gaseinlaßventils ist wie folgt:

Evakuierung aller Volumina
1. das Gefäß steht unter Vakuum;
2. das Nachfüllvolumen 13 wird an einem Gaseinlaß (I) ausgepumpt:
3. das Reduziervolumen 15 wird am Gaseinlaß (II) ausgepumpt;
4. das Rückstellvolumen 9 wird am Gaseinlaß (III) ausgepumpt.

### Füllen des Gases

1. am Gaseinlaß (III) wird Gas eingefüllt; der im Verhältnis zu einem Gefäßvolumen höhere Gasdruck im Rückstellvolumen 9 führt zum Rückstellen des Stößels 5, das heißt, zur Bewegung des Stößels 5 in seine Verschlußstellung an der Ventilöffnung 11; es ist auch möglich, den Stößel 5 durch Vorbetätigung zu schließen oder die Rückstellung durch Hinzufügung einer Rückstellfeder zu unterstützen;
2. in das Nachfüllvolumen 13 wird über den Gaseinlaß (I) und in das Reduziervolumen 15 wird über den Gaseinlaß (II) Gas eingelassen; der Druck im Nachfüllvolumen 13 und Reduziervolumen 15 sollte zusammen nicht höher als der Druck im Rückstellvolumen 9 sein.

Von dem im erfindungsgemäßen Gaseinlaßventil aufgenommenen Nachfüllvolumen 13 soll ein Betrag in ein angeschlossenes Gefäß injiziert werden. Die in das Gefäß einzulassende Gasmenge kann variiert werden durch:
1. unterschiedliche Drucke und somit unterschiedliche eingelassene Gasmengen im Nachfüllvolumen 13 und Reduziervolumen 15, wobei bei diesem Verfahren das Reduziervolumen 15 im Ventil nicht zwingend notwendig ist; in einer anderen Ausführungsform könnte ein funktionsgleiches aber kostengünstiges Ventil auch ohne Reduziervolumen 15 hergestellt werden; allerdings ändert sich das Ausströmverhalten der Gase aufgrund der variierten Drucke.
2. das Nachfüllvolumen 13 wird durch Verschieben des Trennschiebers 21 zwischen dem Nachfüllvolumen 13 und dem Reduziervolumen 15 variiert; hierbei bleibt das Ausströmverhalten des Gases gleich; insbesondere bei der Änderungen von großen zu kleinen einzulassenden Gasmengen während des Betriebes empfiehlt sich eine Reduktion des Nachfüllvolumens 13;
3. unterschiedliche Baugrößen des Ventils und unterschiedliche Bohrungen des Nachfüllvolumens 13 empfehlen sich entsprechend der Anforderungen der einzulassenden Gasmenge.

### Injektion des Gases

Der Stößel 5, der zur Öffnung des Nachfüllvolumens 13 benötigt wird und der das Gefäßvolumen vom Nachfüllvolumen 13 trennt, wird durch einen Wirbelstromantrieb bewegt. Das dazu nötige Feld wird mit Hilfe einer in das Ventil integrierten Flachspule 17, einer sogenannten "pancake"-Spule, erzeugt. Die Öffnung des Stößels 5 erfolgt sehr schnell und beträgt bis zur vollständigen Öffnung weniger als 10 Millisekunden, abhängig vom Einfülldruck und von der Größe des Stößels 5. Die Schließung des Ventils erfolgt durch den angelegten Gasdruck.

Nach der Injektion beginnt der Ablaufplan wiederum mit dem Füllen des Gases. Falls das Rückstellvolumen 9 nicht mit den übrigen Volumina gekoppelt ist, kann meist auf das Nachfüllen des Rückstellvolumens 9 verzichtet werden. Es empfiehlt sich der Einbau von Manometern bei den verschiedenen Volumina, um den jeweiligen Status der Füllung wiederzugeben.

Mit der erfindungsgemäßen Konstruktion ist es möglich, Gasmengen im Bereich von mbarL bis hin zu Mengen barL innerhalb von ms in einem Volumen zu injizieren. Dies ist aufgrund des geringen Leitwertes mit einem Schieber 17 möglich. Ein unbeabsichtigtes Öffnen des erfindungsgemäßen Gaseinlaßventils ist nicht möglich, da der Stößel 5 der einzige bewegliche Teil ist, der durch den angelegten Gasdruck im geschlossenen Zustand gehalten wird.

Ein Regulierung der eingelassenen Gasmenge ist durch den gewählten Gasdruck (in einem Testfall des Ventils bis zu 30 bar konstant) und durch die Größe des Gaseinlaßvolumens möglich. Das Volumen kann durch Variation eines eingebauten Reglers verringert werden, so daß der gewählte Einlaßdruck immer gleich gehalten werden kann, bei Variationen der eingelassenen Gasmenge. Dies garantiert eine gleiche Strömungsgeschwindigkeit. Dieses sehr schnell öffnende Ventil für große und variable Gasmengen kann zum Abbruch vielfältiger Plasmaentladungen in kürzester Zeit - z.B. bei Beschichtungs- oder Sputterprozessen - eingesetzt werden. Weiterhin kann es auch bei Steuerungszwecken Einsatz finden.

## Patentansprüche

1. Gaseinlaßventil zum Einsatz innerhalb einer Magnetfeldanordnung mit einem Ventilkörper (1), mit einem in dem Ventilkörper (1) ausgebildeten Nachfüllvolumen (13), wobei das Nachfüllvolumen (13) durch einen Stößel (5) gegenüber einer Ventilöffnung (11) abgedichtet ist, mit einem in dem Ventilkörper (11) ausgebildeten Rückstellvolumen (9), mit einer Induktionsspule (17) zur induktiv veranlaßten Bewegung des Stößels (5) aus einer Verschlußstellung an der Ventilöffnung (11) in eine Öffnungsstellung,
**dadurch gekennzeichnet, daß** das Einlaßventil einen Trennschieber (21) zum Abtrennen eines zu injizierenden Teilvolumens im Nachfüllvolumen (13) aufweist.

2. Gaseinlaßventil nach Anspruch 1,
**dadurch gekennzeichnet,**
**daß** die Induktionsspule (17) eine Flachspule ist.

3. Gaseinlaßventil nach Anspruch 1 oder 2,
**dadurch gekennzeichnet,**
**daß** der Ventilkörper (1) aus einem Metall ist.

4. Gaseinlaßventil nach einem der Ansprüche 1 bis 3,
**dadurch gekennzeichnet,**
**daß** der Stößel (5) aus Aluminium gefertigt ist.

5. Gaseinlaßventil nach Anspruch 4,
**dadurch gekennzeichnet,**
**daß** der Stößel (5) im Bereich des Nachfüllvolumens (13) aus Edelstahl gefertigt ist.

6. Gaseinlaßventil nach einem der vorstehenden Ansprüche,
**dadurch gekennzeichnet,**
**daß** in dem Ventilkörper (1) zusätzlich ein Reduziervolumen (15) ausgebildet ist.

7. Gaseinlaßventil nach Anspruch 6,
**dadurch gekennzeichnet,**
**daß** der Druck im Nachfüllvolumen (13) und Reduziervolumen (15) zusammen nicht höher als der Druck im Rückstellvolumen (9) ist.

8. Gaseinlaßventil nach einem der vorstehenden Ansprüche,
**dadurch gekennzeichnet,**
**daß** an dem Ventilkörper (1) ein Anschlußteil (3) ausgebildet ist, das koaxial zu der Ventilöffnung (11) ausgebildet ist.

## Claims

1. Gas inlet valve for use inside a magnetic field with a valve body (1), with a refill volume (13) formed in the valve body (1), in which the refill volume (13) is sealed by a tappet (5) opposite a valve outlet (11), with a restoring volume (9) formed in the valve body (11), with an induction coil (17) for moving the tappet (5) inductively from a closed position at the valve outlet (11) into an open position, **characterised in that** the inlet valve has a shut off valve (21) for separating off a partial volume to be injected in the refill volume (13).

2. Gas inlet valve according to claim 1,
**characterised in that**
**that** the induction coil (17) is a flat coil.

3. Gas inlet valve according to claim 1 or 2,
**characterised in that**
**that** the valve body (1) is made of metal.

4. Gas inlet valve according to one of claims 1 to 3,
**characterised in that**
**that** the tappet (5) is made of aluminium.

5. Gas inlet valve according to claim 4,
**characterised in that**
**that** the tappet (5) is made of high grade steel in the area of the refill volume (13).

6. Gas inlet valve according to one of the above claims,
**characterised in that**
**that** a reducing volume (15) is also formed in the valve body (1).

7. Gas inlet valve according to claim 6,
**characterised in that**
**that** the pressure in the refill volume (13) and reducing volume (15) together is not higher than the pressure in the restoring volume (9).

8. Gas inlet valve according to one of the foregoing claims,
**characterised in that**
**that** a connector (3) is formed on the valve body (1), which is formed coaxially to the valve outlet (11).

## Revendications

1. Soupape d'entrée de gaz utilisable à l'intérieur d'un agencement de champ magnétique, comprenant un corps (1) de soupape, avec un volume de remplissage (13) formé dans le corps (1) de soupape, le volume de remplissage (13) étant rendu étanche par rapport à une ouverture (11) de soupape au moyen d'un poussoir (5), avec un volume de rappel (9) formé dans le corps (1) de soupape, une bobine à induction (17) pour le déplacement provoqué par induction du poussoir (5) depuis une position de fermeture contre l'ouverture (11) de soupape vers une position d'ouverture,
**caractérisée en ce**
**que** la soupape d'entrée présente un tiroir de séparation (21) pour séparer un volume partiel à injecter dans le volume de remplissage (13).

2. Soupape d'entrée de gaz selon la revendication 1,
**caractérisée en ce**
**que** la bobine à induction (17) est une bobine plate.

3. Soupape d'entrée de gaz selon la revendication 1 ou 2,
**caractérisée en ce**
**que** le corps (1) de soupape est en un métal.

4. Soupape d'entrée de gaz selon l'une des revendications 1 à 3,
**caractérisée en ce**
**que** le poussoir (5) est réalisé en aluminium.

5. Soupape d'entrée de gaz selon la revendication 4,
**caractérisée en ce**
**que** le poussoir (5) est réalisé en acier fin dans la zone du volume de remplissage (13).

6. Soupape d'entrée de gaz selon l'une quelconque des revendications précédentes,
**caractérisée en ce**
**qu'**un volume réducteur (15) est également formé dans le corps (1) de soupape.

7. Soupape d'entrée de gaz selon la revendication 6,
**caractérisée en ce**
**que** la pression dans le volume de remplissage (13) et le volume réducteur (15) n'est pas plus élevée au total que la pression dans le volume de rappel (9).

8. Soupape d'entrée de gaz selon l'une quelconque des revendications précédentes,
**caractérisée en ce**
**qu'**il est prévu sur le corps (1) de soupape une pièce de raccordement (3) qui est formée coaxialement par rapport à l'ouverture (11) de soupape.
